(19) Europäisches Patentamt
European Patent Office
Office européen des brevets

(11) **EP 3 479 181 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **17735458.6**

(22) Anmeldetag: **28.06.2017**

(51) Internationale Patentklassifikation (IPC):
**G05B 23/02** (2006.01)

(52) Gemeinsame Patentklassifikation (CPC):
**B64D 45/00; B64D 15/20; G05B 23/0254;**
B64D 2045/0085

(86) Internationale Anmeldenummer:
**PCT/EP2017/066007**

(87) Internationale Veröffentlichungsnummer:
**WO 2018/002148 (04.01.2018 Gazette 2018/01)**

(54) **VERFAHREN UND ASSISTENZSYSTEM ZUR DETEKTION EINER FLUGLEISTUNGSDEGRADIERUNG**

METHOD AND ASSISTANCE SYSTEM FOR DETECTING A DEGRADATION OF FLIGHT PERFORMANCE

PROCÉDÉ ET SYSTÈME D'ASSISTANCE POUR LA DÉTECTION D'UNE DÉGRADATION D'UNE PUISSANCE DE VOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2016 DE 102016111902**

(43) Veröffentlichungstag der Anmeldung:
**08.05.2019 Patentblatt 2019/19**

(73) Patentinhaber: **Deutsches Zentrum für Luft- und Raumfahrt e.V.**
**51147 Köln (DE)**

(72) Erfinder:
• **DEILER, Christoph**
**38106 Braunschweig (DE)**
• **FEZANS, Nicolas**
**38102 Braunschweig (DE)**

(74) Vertreter: **Gramm, Lins & Partner**
**Patent- und Rechtsanwälte PartGmbB**
**Freundallee 13a**
**30173 Hannover (DE)**

(56) Entgegenhaltungen:
**US-A1- 2014 090 456 US-A1- 2016 035 203**
**US-B1- 6 304 194**

**Beschreibung**

Die Erfindung betrifft ein Verfahren und eine Vorrichtung zur Detektion einer durch eine Vereisung hervorgerufene Flugleistungsdegradierung eines im Flug befindlichen Flugzeuges.

Flugzeuge weisen aerodynamische Flächen auf, die von der umströmenden Luft mit einer Geschwindigkeit angeströmt werden und hierbei eine Auftriebskraft erzeugen, die es dem Flugzeug erlauben, innerhalb der atmosphärischen Luftmassen zu fliegen. Solche aerodynamischen Flächen können jedoch je nach Flugsituation anfällig für Vereisung sein, wodurch sich an der äußeren, von den umgebenden Luftmassen umströmte Strömungsoberfläche eine Eisschicht (partiell oder vollständig) bildet, welche die aerodynamischen Eigenschaften der aerodynamischen Fläche verändern und sich somit negativ auf den Gesamtflugzustand auswirken können. Aber auch Vereisungen am Rumpf oder anderen Flächen, die nicht hauptsächlich zum Erzeugen einer Auftriebskraft notwendig sind, können sich negativ auf die Flugeigenschaften des Flugzeuges auswirken, was gerade in der Start- und Landephase schnell zu kritischen Situationen führen kann.

Änderungen der Flugleistung, insbesondere Degradierungen der Flugleistung im Allgemeinen und Vereisungen im Speziellen während des Fluges zu detektieren, ist dabei nicht ohne weiteres trivial. Eine manuelle Überprüfung der aerodynamischen Flächen z.B. auf Vereisung ist dabei im Flug schon deshalb nicht möglich, da ein Zugang zu den aerodynamischen Flächen des Fluges durch das Bordpersonal ausgeschlossen ist. Anderweitige Systeme, die auf einer sensorischen Detektion einer Vereisung beruhen, weisen bisweilen einen hohen Grad an Komplexität und technische Anfälligkeit auf, was nicht zuletzt zu einer hohen Fehlalarmquote und somit geringe Akzeptanz durch die Piloten führt.

Aus der US 6,253,126 B1 ist ein Verfahren und eine Vorrichtung zur Flugüberwachung bekannt, wobei an dem Flugzeug, insbesondere an den Flügeln des Flugzeugs, eine Reihe von zusätzlichen Luftdrucksonden angeordnet werden, um aus einer möglichst lückenlosen Überwachung des Flügelprofildruckverlaufes auf wichtige Flugparameter zu schließen. Mit Hilfe dieser Sensoren soll es darüber hinaus auch möglich sein, einen Vereisungszustand detektieren zu können.

Nachteilig hierbei ist jedoch, dass kein ganzheitliches Konzept vorgesehen ist, sodass eine z.B. Vereisungsdetektion zwischen den Sensoren nicht erkannt oder nur eine partielle Vereisung an einem der Sensoren als eine Vereisung detektiert wird. Im ersteren Fall wird eine Vereisung nicht erkannt, was sich insgesamt negativ auf die Flugeigenschaften auswirken kann und dadurch das potenzielle Unfallrisiko erhöht. Im zweiten Fall wird zwar eine Vereisung detektiert, woraufhin unter Umständen Gegenmaßnahmen durch den Piloten ergriffen werden, obwohl die Vereisung keine sicherheitsrelevante Beeinträchtigung der Flugeigenschaften darstellt. In einem solchen Fall würden dann die ergriffenen Gegenmaßnahmen, wie beispielsweise Änderung des Flugweges, zu höheren Kosten und längeren Flugzeiten führen, obwohl hierfür keine Notwendigkeit bestand. Darüber hinaus ist das in der US 6,253,126 B1 vorgeschlagene Verfahren sehr aufwändig zu entwickeln, zu installieren und zu warten. Außerdem wäre eine solche Vorrichtung sehr schwer (Geräte, Stromversorgung, Datenkommunikation zur Recheneinheit, die die nicht triviale Auswertung durchführen sollen), welche mit sehr großer Wahrscheinlichkeit zu einem erhöhten Kraftstoffverbrauch führen würden.

Aus der US 8,692,361 B2 ist ein Verfahren zum Überwachen der Strömungsqualität bei aerodynamischen Flächen von Flugzeugen bekannt, wobei die Haupteigenschaft der überwachten Strömung die Laminarität ist. Hierzu wird die die aerodynamische Fläche beheizt, sodass eine frühe Transition von der laminaren Umströmung in eine turbulente Umströmung erzwungen wird. Anhand von Widerstandsdaten, die bei der laminaren und bei der turbulenten Umströmung aufgezeichnet wurden, lässt sich nun eine Verschmutzung der aerodynamischen Oberfläche feststellen.

Nachteil hierbei ist, dass sowohl ein aufwändiges Heizsystem als auch ein komplexes Sensorsystem notwendig ist, um die entsprechend negativen Beeinflussungen auf die aerodynamische Fläche feststellen zu können. Eine die Flugzeugeigenschaft beeinträchtigende Vereisung oder Verschmutzung der aerodynamischen Flächen lässt sich so nicht sicher feststellen, da dieses Verfahren nur eine auswertbare Messung der aerodynamischen Güte der Oberfläche zwischen einem "perfekt sauberen" Zustand und einem "leicht verschmutzten" bzw. "leicht vereisten" Zustand ermöglicht. Bei einer weiteren Degradierung der aerodynamischen Güte der Oberfläche kann kein Unterschied bei dem in der US 8,692,361 B2 beschriebenen Verfahren mehr festgestellt werden. Die Degradierung, die unter Umständen sicherheitskritisch werden könnte (z.B. bei starker Vereisung), liegt jenseits des Bereiches, wofür das beschriebene Verfahren genutzt werden kann.

Die US 6,304,194 B1 offenbart ein Verfahren und eine Vorrichtung zum Erkennen einer Vereisung eines Flugzeuges bzw. eines Flugobjektes im Flug, wobei hier Werte bezüglich der Flugleistung (aircraft performance) ermittelt werden. Dabei wird ein Sensormodell verwendet, welches die Sensorwerte im nicht-degradierten Zustand abbildet. Die aus dem Sensormodell stammenden Sensorwerte werden dann mit den gemessenen Sensorwerten verglichen.

Die US 2016/035203 A1 sowie US 2014/090456 A1 offenbaren jeweils die Detektion einer Vereisung eines Flugzeuges basierend auf der Turbinenleistung. Es ist daher Aufgabe der vorliegenden Erfindung ein verbessertes Verfahren und eine verbesserte Vorrichtung zum Detektieren einer durch eine Vereisung hervorgerufene Flugleistungsdegradierung von aerodynamischen Flächen eines im Flug befindlichen Flugzeuges anzugeben, wobei auf zusätzliche Sensoren, die im Standardflugbetrieb nicht vorgesehen sind, verzichtet werden soll und weitere technische Einrichtungen zur Beeinflussung von Strömungseigenschaften nicht notwendig sein sollen.

Die Aufgabe wird erfindungsgemäß mit dem Verfahren zur Detektion einer Flugvereisung gemäß Anspruch 1 sowie einem Assistenzsystem zur Durchführung des Verfahrens gemäß Anspruch 15 erfindungsgemäß gelöst.

Gemäß Anspruch 1 wird ein Verfahren zur Detektion einer durch eine Vereisung hervorgerufene Flugleistungsdegradierung eines im Flug befindlichen Flugzeugs vorgeschlagen, wobei zunächst ein digitales Flugleistungsmodell für den betreffenden Flugzeugtyp des im Flug befindlichen Flugzeugs bereitgestellt wird, welches die nominelle Flugleistung des Flugzeuges im nicht-degradierten Flugzustand abbildet.

Als Flugleistung wird eine Unterdisziplin der Flugmechanik bezeichnet, welche alle Aspekte der Fähigkeit eines Flugzeuges betrachtet, ein gefordertes Flugmanöver durchzuführen. Die Flugleistung eines Flugzeuges beinhaltet dabei Aussagen über z.B. die maximal erreichbare Geschwindigkeit, die minimale Geschwindigkeit, bei der das Flugzeug steuerbar bleibt, die optimale Reisefluggeschwindigkeit (geringster Kraftstoffverbrauch pro Zeiteinheit und Wegdistanz, dem maximalen Steigvermögen sowie der größten Sinkgeschwindigkeit, der Reichweite, der Höchstflugdauer, usw.) sowie alle Zusammenhänge zwischen beteiligten Größen und Variablen während eines stationären oder quasi stationären Flugzustandes, was nicht zwangsläufig auf einen stationären horizontalen Geradeausflug beschränkt sein muss. Die Flugleistung eines Flugzeuges wird im Wesentlichen von seinen aerodynamischen Eigenschaften einerseits und dem (verfügbaren) Schub der Triebwerke andererseits bestimmt und stellt in der Regel eine Kombination beider Anteile dar.

Die nominelle Flugleistung bezeichnet dabei die entsprechenden Fähigkeiten und Eigenschaften des Flugzeuges, das Flugmanöver im nicht-degradierten Zustand durchzuführen. So lassen sich beispielsweise aus Flugleistungsmodellen ableiten, welche Geschwindigkeit ein Flugzeug einnehmen wird, wenn die übrigen Randbedingungen des Flugzustandes wie beispielsweise die barometrische Höhe, der Triebwerksschub, die Masse sowie aerodynamische Eigenschaften des Flugzeuges bekannt sind. Der Begriff der Flugleistung ist dabei per se erst einmal nicht mit der physikalischen Definition einer Leistung (Energie pro Zeit) gleichzusetzen, sondern behandelt vielmehr im breitesten Sinne die Fähigkeit eines Flugzeuges, bei vorgegebenen Randbedingungen des Flugzustandes das Flugmanöver durchzuführen.

Flugleistungsmodelle werden im Flugbetrieb sowie in der Flugzeugentwurfsphase in verschiedenen Formen und Darstellungen verwendet. Piloten nutzen beispielsweise Flugleistungsmodelle zur Bestimmung der für einen Flug notwendigen Kraftstoffmenge, beispielsweise direkt durch Anwendung eines numerischen Flugleistungsmodells oder mittels einer geeigneten Darstellung von daraus extrahierten Informationen (z.B. in Form von Tabellen, Nomogrammen oder Schaubildern).

Im breitesten Sinne lässt sich somit aus einem Flugleistungsmodell unter Kenntnis mehrerer Randbedingungen eines Flugzustandes ableiten, ob mit den vorgegebenen Randbedingungen das Flugmanöver durchführbar ist oder nicht. Es lassen sich je nach Flugleistungsmodell auch weitere Daten des Flugzustandes ableiten bzw. extrahieren, die in dem aktuellen Flugzustand nicht bekannt sind oder noch nicht bekannt sein können.

Einem solchen Flugleistungsmodell kann dabei eine numerische Berechnung zugrunde liegen, mit der basierend auf den bekannten Randbedingungen des Flugzustandes die unbekannte, aus dem Flugleistungsmodell zu extrahierende Größe berechnet werden kann. Denkbar ist aber auch eine tabellarische Form, wie beispielsweise Look-Up-Tabellen.

Erfindungsgemäß wird nun ein derartiges Flugleistungsmodell in digitaler Form für den betreffenden Flugzeugtyp des im Flug befindlichen Flugzeugs bereitgestellt, wobei sich hieraus die nominelle Flugleistung des Flugzeugs im nicht-degradierten bzw. unvereisten Flugzustand ableiten lässt.

Während des Fluges wird nun der aktuelle Flugzustand des im Flug befindlichen Flugzeuges ermittelt, wobei der aktuelle Flugzustand aus einer Mehrzahl von Werten bestimmt wird, welche die Flugleistung des Flugzeuges beeinflussende oder charakterisierende Flugzustandsparameter beinhaltet. Im Sinne der vorliegenden Erfindung ist der aktuelle Flugzustand ein n-Tupel aus einer Mehrzahl von verschiedenen Flugzustandsparametern, die letztlich in ihrer Gesamtheit den aktuellen Flugzustand definieren. Derartige Flugzustandsparameter können beispielweise die Höhe, die Geschwindigkeit gegenüber der umgebenden Luft, die Masse sowie daraus ableitbare Parameter sein. Bei den Flugzustandsparametern kann es sich beispielsweise um sensorisch erfassbare Parameter handeln, die beispielsweise die barometrische Höhe oder die Fluggeschwindigkeit gegenüber der umgebenden Luft sein. Es kann sich aber auch um vom Piloten manuell eingegebene Parameter handeln, wie beispielsweise die abgeschätzte Gesamtmasse des Flugzeuges. Darüber hinaus kann es sich bei den Flugzustandsparametern auch um aus anderen Flugzustandsparametern ableitbare Parameter handeln, wie beispielsweise Kenngrößen für den Auftrieb oder Kenngrößen für den Widerstandsbeiwert.

Die sensorisch erfassten Flugzustandsparameter sind dabei ausschließlich jene Parameter, die sich mit Hilfe von an Bord befindlichen Sensoren erfassen und detektieren lassen. Wie später noch gezeigt, werden keine weiteren, zusätzlichen Sensoren benötigt, die in der Regel in der Standardausführung des betreffenden Flugzeugtyps nicht vorgesehen sind.

Aus den Werten eines oder mehrerer Flugzustandsparameter des aktuellen Flugzustandes wird nun mit Hilfe einer elektronischen Auswerteeinheit während des Fluges eine aktuelle Flugleistungskennzahl berechnet, die in Bezug auf den aktuellen Flugzustand des im Flug befindlichen Flugzeuges eine Bewertung der Flugleistung zum aktuellen Zeitpunkt darstellt. Die aktuelle Flugleistungskennzahl ist dabei erfindungsgemäß die Gesamtenergieänderung E über eine gewisse Zeitspanne. Denkbar sind aber auch andere Kennzahlen, die einen Rückschluss auf die Flugleistung in Bezug auf den aktuellen Flugzustand erlaubt und die insbesondere in Bezug auf die Vereisung eine Variation in der Flugleistung anzeigt.

Des Weiteren wird eine nominelle Flugleistungsreferenzkennzahl aus dem bereitgestellten Flugleistungsmodell in Abhängigkeit von den Werten eines oder mehrere Flugzustandsparameter des aktuell ermittelten Flugzustandes mittels der elektronischen Auswerteeinheit berechnet, wobei die nominelle Flugleistungsreferenzkennzahl in Bezug auf die Vereisung des Flugzeuges den ideellen, nicht-degradierten Flugzustand abbildet. Die Flugleistungsreferenzkennzahl kann dabei ebenfalls die nominelle Gesamtenergie $E_{Ref}$ bzw. Gesamtenergieänderung $E_{Ref}$ sein und ist vorzugsweise dergestalt, dass sie mit der aktuellen Flugleistungskennzahl korreliert bzw. quantitativ vergleichbar ist.

Anschließend wird die aktuelle Flugleistungskennzahl mit der nominellen Flugleistungsreferenzkennzahl verglichen, wobei eine Flugleistungsdegradierung des Flugzeuges im Flug dann detektiert wird, wenn der Vergleich eine Abweichung zwischen der aktuellen Flugleistungskennzahl und der nominellen Flugleistungsreferenzkennzahl anzeigt, die größer ist als ein vorgegebener Grenzwert bzw. Schwellenwert.

Damit wird es möglich, während des Fluges des Flugzeuges ausschließlich basierend auf den zur Verfügung stehenden Sensorwerten von standardmäßig verbauten Sensoren eine insbesondere sicherheitskritische Degradierung der Flugleistung zu detektieren, ohne dass es hierfür spezielle, fehleranfällige Zusatzsysteme bedarf und ohne dass hierfür spezielle Flugmanöver durchgeführt werden müssen. Als sicherheitskritisch wird eine Degradierung dann angenommen, wenn diese signifikante bemerkbare Auswirkungen auf das Flugzeug hat. Zum Beispiel kann ab einer bestimmten Degradierungsrate die nominelle maximale Steigrate des Flugzeuges nicht mehr erreicht werden, wodurch unter Umständen ein schnelles Ausweichen oder Durchstarten nicht mehr möglich ist. Auch kann weiterhin eine Degradierung dann als extrem sicherheitskritisch angesehen werden, wenn eine Strömungsablösung schon in Flugbereichen auftritt, in denen das Flugzeug nominell ohne Einschränkung fliegbar wäre.

Die Erfinder haben hierbei erkannt, dass durch eine Betrachtung der Flugleistung, heruntergebrochen auf eine Kennzahl, während des Fluges und durch Feststellung einer Abweichung der aktuellen Flugleistung von einer nominellen Flugleistung, ebenfalls heruntergebrochen auf eine Kennzahl, eine insbesondere sicherheitskritische Vereisung sicher erkannt werden kann. Grund hierfür liegt darin, dass durch die Vereisung von aerodynamischen Flächen des Flugzeuges oder anderen umströmten Oberflächen der Widerstand des Flugzeuges zunimmt, was sich letztlich in einer veränderten Flugleistung und damit einer veränderten Flugleistungskennzahl niederschlägt. Dabei wurde auch erkannt, dass eine solche Kennzahl auch schon bei geringen Zuwächsen des Widerstandes aussagekräftig ist, um vor einer sicherheitskritischen Vereisung zu warnen.

Bedeutsam hierbei ist, dass erkannt wurde, dass die Variation der Flugleistung eines Flugzeugtyps innerhalb der gesamten Flugzeugflotte immer unterhalb der durch eine Vereisung eines Flugzeuges entstehende Abweichung der Flugleistung liegt, so dass durch Betrachtung der aktuellen Flugleistung in Bezug auf eine nominelle Flugleistung des jeweiligen Flugzeugtyps trotz inhärenter Variation der Flugleistung über die einzelnen Flugzeuge der Flugzeugflotte dennoch eine sichere Vereisungsdetektion realisiert werden kann. Dabei wurde auch erkannt, dass jede sicherheitskritische Flugleistungsdegradierung immer größer ist als die in der gesamten Flugzeugflotte inhärente Variation der Flugleistung. So lässt sich eine sicherheitskritische Flugleistungsdegradierung von der natürlichen Variation der Flugleistung innerhalb der gesamten Flugzeugflotte unterscheiden.

Insbesondere Triebwerkskenngrößen, die als Flugzustandsparameter eine nicht unerhebliche Auswirkung auf die aktuelle Flugleistung haben, können zu einer Variation der Flugleistung gegenüber einer Referenzierung der Flugleistung im nicht-degradierten Zustand führen, was beispielsweise an der Alterung der Triebwerke, Sauberkeit der Triebwerke und Wartungsintervallen liegen kann. Dabei wurde erkannt, dass derartige Variationen der Flugleistung, die sich auf Variationen der Triebwerksleistung, insbesondere der Schubleistung der Triebwerke, beziehen, ebenfalls unterhalb der durch eine Degradierung hervorgerufenen Variation der Flugleistung liegen, so dass auch unabhängig von der im Betrieb zu erwartenden Triebwerksleistungsschwankung eine Degradierung sicher detektiert werden kann.

Das erfindungsgemäße Verfahren ist darüber hinaus in der Lage, an jeden Flugzeugtyp einer Flugzeugflotte insgesamt oder individuell an jedes einzelne Flugzeug entsprechend angepasst zu werden, indem das bereitgestellte Flugleistungsmodell für zumindest jeden Flugzeugtyp der Flugzeugflotte oder individuell für das jeweilige Flugzeug die nominelle Flugleistung des Flugzeuges im nicht-degradierten Flugzustand abbildet.

Ursachen für eine Flugleistungsdegradierung können neben einer Vereisung des Flugzeuges auch eine Verschmutzung zumindest eines Teils der Flugzeughülle, eine Verschmutzung der Triebwerke (bspw. durch Sand, Vulkanasche, Ablagerungen an den Triebwerksschaufeln), Abrasion innerhalb der Triebwerke bzw. Flugzeughülle, Beschädigungen der Flugzeughülle bzw. der Triebwerke bspw. Hervorgerufen durch Kollisionen mit Objekten (Hagel, Vogelschlag, Flugzeuge, Fahrzeuge, Gebäuden, Projektilen) sowie zusätzliche Störobjekte wie z.B. geöffnete Fallschirme beim Lastabwurf, Anwesenheit von externen (nicht nominell berücksichtigten) Equipment sein.

Vorteilhafterweise werden als Flugzustandsparameter die aktuelle Fluggeschwindigkeit, die aktuelle Höhe, die aktuelle Flugzeuggesamtmasse sowie eine zeitliche Änderung in diesen Flugzustandsparametern, d.h. eine zeitliche Änderung der aktuellen Fluggeschwindigkeit, eine zeitliche Änderung der aktuellen Flughöhe sowie eine zeitliche Änderung der Flugzeuggesamtmasse ermittelt. Außerdem können als Flugzustandsparameter eine Triebwerkskenngröße zur Bestimmung der Triebwerksleistung, ein Lastvielfaches in zumindest der Z-Achse (Hochachse), ein Lastvielfaches in Richtung der beiden übrigen Achsen (Längsachse, Querachse), eine aktuelle Auftriebskenngröße des Flugzeuges, der aktuelle Staudruck sowie eine Flugzeugkonfiguration als Flugzustandsparameter ermittelt werden.

Um atmosphärisch bedingte Fehldetektionen zu vermeiden, ist es vorteilhaft, wenn von einem quasi-stationären Zustand der Atmosphäre ausgegangen wird. Dies bedeutet, dass zunächst ein geeigneter Ansatz, wie zum Beispiel die in der Wissenschaft und Technik verbreiteten Kalman-Filter, zur Bestimmung des aktuellen Windes in einem erdbezogenen Koordinatensystem verwendet wird, wodurch die resultierenden Informationen zur weiteren Nutzung innerhalb der Flugleistungsbestimmung zur Verfügung steht. Dabei wurde erkannt, dass sich die zeitliche Änderung der aktuellen Fluggeschwindigkeit in zwei grundlegende Teile aufspalten lässt, nämlich zum einen Anteil, der aus der Änderung der Bahngeschwindigkeit bei einem Flug durch ein nichtveränderliches Windfeld resultiert und zum anderen einen Anteil, der sich daraus ergibt, dass das Flugzeug eine Windänderung erfährt. Letzteres ergibt sich zum Beispiel daraus, dass das Windfeld sich lokal oder zeitlich verändert, wodurch die Anströmgeschwindigkeit beeinflusst wird. Es wurde von den Erfindern erkannt, dass nur der erste Anteil der Geschwindigkeitsänderung mit der Flugleistung korreliert und somit für eine verbesserte Detektion relevant ist.

Mithilfe dieser Flugzustandsparameter, die sich mithilfe von standardmäßig an Bord eines Flugzeuges befindlichen Sensoren ermitteln lassen, kann eine Vereisung eines im Fluge befindlichen Flugzeuges sicher erkannt werden. Dabei kann die aktuelle Fluggeschwindigkeit sowie die aktuelle Höhe (barometrische Höhe) und der Staudruck mithilfe von Sensoren ermittelt werden, die insbesondere bei Verkehrsmaschinen bzw. Verkehrsflugzeugen standardmäßig immer vorhanden sind. Weitere, zusätzliche Sensoren, die extra zur Vereisungsdetektion verbaut werden müssten, sind nicht notwendig. Eine zeitliche Änderung der aktuellen Fluggeschwindigkeit sowie eine zeitliche Änderung der aktuellen Flughöhe lassen sich dabei aus den von den Sensoren stammenden Werten über eine vorgegebene Zeitspanne entsprechend ableiten. Die aktuelle Flugzeuggesamtmasse kann beispielsweise aus der Eingabe des Piloten vor dem Start sowie des Kraftstoffverbrauches während des Fluges hinreichend genau ermittelt werden. Weiterhin wird zudem je nach Flugzeugtyp während des Fluges die aktuelle Gesamtmasse durch bordseitige Avioniksysteme geschätzt. Eine Änderung der Flugzeuggesamtmasse, die durch den kontinuierlichen Treibstoffverbrauch während des Fluges stattfindet, kann direkt aus dem Treibstoffverbrauch (Sensoren in den Treibstoffzuleitungen) abgeleitet werden. Triebwerkskenngrößen zur Bestimmung der Triebwerksleistung werden während des Fluges von jedem Triebwerk der Bordelektronik eines Flugzeuges bereitgestellt und sind somit ebenfalls kontinuierlich abgreifbar. Gleiches gilt für die Lastvielfachen, deren Werte sich aus dem Inertialnavigationssystem des Flugzeuges ergeben. Die Bestimmung der Auftriebsgröße kann dabei rechnerisch aus den entsprechenden Messwerten und Messgrößen hergeleitet werden.

Unter einer Flugzeugkonfiguration im Sinne der vorliegenden Erfindung wird die aktuelle Konfiguration des Flugzeuges hinsichtlich der die Aerodynamik beeinflussenden Konfigurationen bezeichnet, wie beispielsweise der Zustand der ausgefahrenen Fahrwerke, die Stellung der Landeklappen oder Vorflügel oder andere Auftriebshilfen. Denn durch eine Veränderung der Flugzeugkonfiguration während des Fluges, beispielsweise während der Landung, wo kontinuierlich die Hochauftriebshilfen ausgefahren werden, verändert sich der durch die Aerodynamik bedingte Widerstand des Flugzeuges, was direkten Einfluss auf die Flugleistung hat. Um Fehldetektionen zu vermeiden, ist daher die Kenntnis über die aktuelle Flugzeugkonfiguration zur Ermittlung der nominellen Flugleistung vorteilhaft, da die nominelle Flugleistung von der jeweiligen Flugzeugkonfiguration abhängt. Unter einer Flugzeugkonfiguration im Sinne der vorliegenden Erfindung wird insbesondere auch die Anwesenheit von optionalen Geräte, die die Flugleistung signifikant beeinflussen, sowie ggf. deren eigener Zustand verstanden. Diese Geräte können bspw. Messinstrumente, Luftbetankungsvorrichtungen (Refueling Pods unter den Tragflächen) sowie deren aktueller Zustand sein (z.B. die Position (geöffnet oder geschlossen) einer Laderampe oder ob ein Luftbetankungsschlauch ein- oder ausgefahren ist).

In einer vorteilhaften Ausführungsform wird die aktuelle Auftriebskenngröße des Flugzeuges als Flugzustandsparameter gemäß der Formel

$$A \equiv \left(n_z\right)^a \cdot g \cdot m$$

berechnet. Dabei ist A die Auftriebskenngröße, $\left(n_z\right)^a$ ein Lastvielfaches in der Auftriebsachse des Flugzeuges, g die Erdbeschleunigung und m die Flugzeuggesamtmasse.

Das Lastvielfache $\left(n_z\right)^a$ in der Auftriebsachse des Flugzeuges kann dabei nach der Formel

$$\left(n_z\right)^a \equiv -\left(n_x\right)^f \cdot \sin\left(\alpha\right) + \left(n_z\right)^f \cdot \cos\left(\alpha\right)$$

berechnet werden, wobei $(n_x)^f$ das Lastvielfache in der Längsachse des Flugzeuges, $(n_z)^f$ das Lastvielfache in der Hochachse des Flugzeuges und a der Anstellwinkel (Anstellwinkel in der Symmetrieebene des Flugzeuges zwischen der Anströmrichtung und der Längsachse des Flugzeuges) ist.

Vorteilhafterweise wird die Triebwerkskenngröße in Bezug zu allen Triebwerken des Flugzeuges gesetzt, bspw. in Form einer Gesamttriebwerkskenngröße oder einer hierzu äquivalenten Triebwerkskenngröße. Bei multimotorigen Flugzeugen kann bspw. eine gemittelte Triebwerkskenngröße über alle Triebwerkskenngrößen aller Triebwerke berechnet werden.

In einer weiteren vorteilhaften Ausführungsform wird für die Triebwerkskenngröße zur Bestimmung der Triebwerksleistung als ein Flugzustandsparameter die Niederdruckwellendrehzahl mindestens eines Triebwerkes des Flugzeuges, vorteilhafterweise aller Triebwerke (bspw. als gemittelte Kenngröße) ermittelt. Die Niederdruckwellendrehzahl eines Triebwerkes eignet sich dabei deshalb als Triebwerkskenngröße besonders gut, da sie mit der Triebwerksleistung, insbesondere mit dem Triebwerksschub, sehr gut korreliert. Denn die Ermittlung der Triebwerksleistung bzw. des Triebwerkschubs während des Fluges ist nur annährungsweise mit komplizierten Verfahren möglich. Die Erfinder haben dabei erkannt, dass mithilfe der Niederdruckwellendrehzahl als eine Triebwerkskenngröße annährungsweise auch die Flugleistung beeinflussende Triebwerksleistung geschlossen werden kann, die zur Detektion einer signifikanten Flugleistungsänderung bzw. eines Vereisungszustandes ausreicht. Komplexe und fehleranfällige und darüber hinaus auch rechenintensive Berechnungsverfahren zur Bestimmung der Triebwerksleistung sind für das vorliegende Verfahren prinzipiell nicht notwendig.

Dies hat den entscheidenden Vorteil, dass das vorliegende Verfahren zur Erkennung einer Vereisung mittels der an Bord befindlichen elektronischen Datenverarbeitungsanlagen ausgeführt werden kann, da keine übermäßige Rechenkapazität erforderlich ist und die Berechnungen auch mit den an Bord befindlichen Avioniksystemen durchführbar ist.

Nachfolgend seien beispielhaft einige Parameter, die für das Verfahren in Frage kommen, genannt. Für die Höhe als Flugzustandsparameter kommen bspw. die barometrische Höhe (mit oder teilweise mit ISA Annahmen), die geometrische Höhe, die geopotentielle Höhe, die ellipsoidische Höhe oder die orthometrische Höhe in Betracht. Des Weiteren kommt als zu berücksichtigender Flugzustandsparameter die Luftdichte, die Temperatur sowie der Luftdruck in betracht. Für den Schub als Flugzustandsparameter kommen bspw. in Betracht: Schub/Thrust, PLA (Power Lever Angle), EPR (Engine Pressure Ratio), $N_1$ (Fan Speed, Low Pressure Core Speed), $N_2$ (Low Pressure Core Speed, High Pressure Core Speed), $N_3$ (High Pressure Core Speed), Torque (possibley normalized), $N_P$ (Propeller Speed), $N_H$ (High pressure turbine rotational speed), $N_L$ (Low pressure turbine rotational speed), FF (Fuel flow), TT (Turbine Temperature), EGT (Exhust Gas Temperature), Öltemperatur, Öldruck, Propeller Pitch, Propeller Loads, Fan Loads, Gear Loads. Für die Geschwindigkeit als Flugzustandsparameter kommen bspw. in Betracht: VIAS (Indicated Airspeed), VCAS (Calibrated Airspeed), VTAS (True Airspeed), VEAS (Equivalent Airspeed), Ma (Machzahl), Fr (Froudezahl), Re (Reynoldszahl). Für den Gesamtauftrieb als Flugzustandsparameter kommen bspw. in Betracht: Auftrieb (d.h. im aerodynamischen System), Z-Kraft (im körperfesten System), Lastvielfaches, Profildruckverteilung über die Spannweite.

Erfindungsgemäß ist die aktuelle Flugleistungskennzahl eine Gesamtenergieänderung über eine vorgegebene Zeitspanne. Die Gesamtenergieänderung lässt sich dabei aus der aktuellen Fluggeschwindigkeit gegenüber der Luft ($V_{TAS}$-True-AirSpeed), der aktuellen barometrischen Flughöhe sowie der Flugzeuggesamtmasse und den jeweils zeitlichen Änderungen hiervon bestimmen. Hierdurch kann die Flugleistungskennzahl und die damit zusammenhängende Darstellung der aktuellen Flugleistung mit sehr einfachen Mitteln berechnet werden, ohne die Genauigkeit des Detektionsverfahrens aus dem Blick zu verlieren.

So lässt sich die aktuelle Flugleistungskennzahl als Gesamtenergieänderung nach der

$$\dot{E}_{ges} \approx (g \cdot \dot{H} \cdot m) + (g \cdot H \cdot \dot{m}) +$$
$$(V_{TAS} \cdot \dot{V}_{TAS} \cdot m) + (\frac{1}{2} \cdot V_{TAS}^2 \cdot \dot{m})$$

berechnen, wobei $E_{ges}$ die Gesamtenergieänderung über die vorgegebene Zeitspanne ist, H die aktuelle Flughöhe, H die zeitliche Änderung der Flughöhen über die vorgegebene Zeitspanne, $V_{TAS}$ die aktuelle Fluggeschwindigkeit gegenüber der umströmenden Luft, $\dot{V}_{TAS}$ die zeitliche Änderung der Fluggeschwindigkeit gegenüber der umströmenden Luft über die vorliegende Zeitspanne, m die aktuelle Flugzeuggesamtmasse und m die zeitliche Änderung der Flugzeuggesamtmasse über die vorgegebene Zeitspanne sowie g die Erdbeschleunigung darstellt. Da die zeitliche Änderung der Erdbeschleunigung g in der Regel sehr klein und deren Relevanz bei der zeitlichen Änderung der Gesamtenergie sehr gering ist, kann die oben dargestellte approximierte Form verwendet werden. So kann beispielsweise der üblicherweise positiv definierte Kraftstoffmassestrom aus den Flugzeugtanks zu den Triebwerken als negative Masseänderung -m eingehen.

Es sei an dieser Stelle noch einmal erwähnt, dass sich die Flugleistungskennzahlen als Gesamtenergieänderung ohne zusätzliche Sensoren ermitteln lässt, da die zur Berechnung der Gesamtenergieänderung benötigten Werte der angegebenen Flugzustandsparameter kontinuierlich durch die Avioniksysteme des Flugzeuges ermittelt und bereitgestellt werden bzw. sich aus den ermittelten Werten verschiedener Flugzustandsparameter herleiten lassen.

In einer vorteilhaften Ausführungsform hierzu wird die nominelle Flugleistungsreferenzkennzahl ebenfalls in Form einer Gesamtenergieänderung angegeben, so dass die nominelle Leistungsreferenzkennzahl eine nominelle Gesamtenergieänderung über eine vorgegebene Zeitspanne ist. Das Flugleistungsmodell ist dabei so ausgebildet, dass basierend auf dem aktuellen Flugzustand und den entsprechenden Werten der Flugzustandsparameter die nominelle Gesamtenergieänderung für den aktuellen Flugzustand ableitbar ist.

Aufgrund der Tatsache, dass durch das Flugleistungsmodell die nominelle Gesamtenergieänderung für den aktuellen Flugzustand ableitbar ist und darüber hinaus die Gesamtenergie als aktuelle Flugleistungskennzahl ermittelt wird, lassen sich beide Kennzahlen miteinander vergleichen und entsprechende Abweichungen feststellen.

In einer vorteilhaften Ausführungsform hierzu wird in Abhängigkeit von der aktuellen Gesamtenergieänderung als aktuelle Flugleistungskennzahl und der nominellen Gesamtenergieänderung als nominelle Flugleistungsreferenzkennzahl ein Differenzwiderstandsbeiwert gemäß der Formel

$$\Delta C_W = \frac{\dot{E}_{ref} - \dot{E}_{ges}}{q \cdot S \cdot V_{TAS}}$$

berechnet, wobei $\dot{E}_{ges}$ die aktuelle Gesamtenergieänderung, $\dot{E}_{ref}$ die nominelle Gesamtenergieänderung, $V_{TAS}$ die Geschwindigkeit des Flugzeuges gegenüber der Luft, q der Staudruck und S die Flügelfläche des Flugzeuges ist. Dieser charakteristische Wert in Form eines Differenzwiderstandsbeiwertes ergibt sich als Unterschied zwischen der aktuellen Flugleistung und der Referenzflugleistung, wobei bei Überschreiten eines vorgegebenen Grenzwertes bezüglich des Differenzwiderstandsbeiwertes bspw. von einer Flugzeugvereisung ausgegangen werden kann und es zu einer Detektion einer Flugzeugvereisung kommt.

Die Umrechnung als dimensionslosen Beiwert $\Delta$Cw ist besonders vorteilhaft, da es ein sehr einfaches Kriterium (z.B. Schwellenwert bei 30% Cwo) ist, das unabhängig vom Flugzustand und Flugzeugzustand sowie unabhängig vom Flugzeug selbst genutzt werden kann. Die nötige Skalierung zwischen ganz kleinen und ganz großen Flugzeugen, oder von langsamen zu schnellen Flugzuständen, ist schon in den Termen, die bei der Berechnung von $\Delta$Cw genutzt werden, berücksichtigt worden.

Um auch an dieser Stelle eine Robustheit gegen äußere Einflüsse zu erreichen, wurde erkannt, dass eine Filterung der ermittelten Kenngröße vorteilhaft ist, um hochdynamische und instationäre Effekte aus zum Beispiel dem Flug durch Turbulenzen kompensieren zu können, die die berechnete aktuelle Flugleistungskenngröße kurzzeitig verfälschen könnten.

In einer weiteren vorteilhaften Ausführungsform werden des Weiteren auch Werte von Flugzustandsparametern ermittelt, aus denen sich ein Schiebeflugzustand ermitteln lässt. In Abhängigkeit von diesen ermittelten Werten von Flugzustandsparametern, aus denen sich ein Schiebeflugzustand ermitteln lässt, wird dann ein Kompensationswert der aktuellen Flugleistungskennzahl berechnet, so dass die aktuelle Flugleistungskennzahl um den Kompensationswert korrigiert wird. Hierdurch kann der Schiebeflugzustand, der die Berechnung der aktuellen Flugleistungskennzahl verfälschen kann, aus der Gesamtenergieänderung herausgenommen so das Risiko von Fehldetektionen während eines Schiebefluges zu verringern bzw. zu vermeiden.

Der Kompensationswert kann dabei ein Widerstandskompensationswert sein, der sich nach der Formel

$$\Delta C_{w,komp} \equiv \frac{n_y^f \cdot m \cdot g \cdot \sin \beta}{q \cdot S}$$

berechnen lässt, wobei $\Delta C_{w,komp}$ der Widerstandskompensationswert ist, $n_y^f$ ein seitliches, flugzeugfestes Lastvielfaches, m die Flugzeuggesamtmasse, g die Erdbeschleunigung, $\beta$ der Schiebewinkel, q der Staudruck und S die Referenzfläche des Flugzeuges darstellen. Der Schiebewinkel kann geschätzt (basierend auf anderen Daten und Informationen), gemessen und/oder berechnet werden.

In einer weiteren vorteilhaften Ausführungsform wird ein reduziertes Flugleistungsmodul in Form einer mehrdimensionalen Tabelle bereitgestellt, wobei jeder für das Flugleistungsmodell relevante Flugzustandsparameter durch eine Tabellendimension abgebildet wird. Jede Tabellendimension weist dabei für den jeweiligen Flugzustandsparameter eine Mehrzahl von Stützstellen auf, die die vorgegebenen Werte der jeweiligen Flugzustandsparameter dieser Tabellendimension abbilden. Für jedes Stützstellenpaar aus Werten der verschiedenen Flugzustandsparameter der einzelnen Tabellendimensionen lässt sich dann mindestens eine nominelle Flugleistungsreferenzkennzahl ableiten, die an dieser durch das Stützstellenpaar definierten Tabellenposition hinterlegt ist.

Es hat sich dabei als vorteilhaft herausgestellt, wenn die Fluggeschwindigkeit gegenüber der umströmenden Luft, eine Auftriebskenngröße des Auftriebes des Flugzeuges, eine Triebwerkskenngröße der Triebwerksleistung, die Flughöhe sowie ggf. eine Flugzeugkonfiguration als Flugzustandsparameter jeweils eine Tabellendimension bilden, so dass sich anhand konkreter Werte dieser Flugzustandsparameter die Flugleistungsreferenzkennzahl, beispielsweise in Form einer nominellen Gesamtenergieänderung ermitteln lässt.

Der Vorteil dieser tabellarischen Bereitstellung des Flugleistungsmodells besteht darin, dass ohne nennenswerten Rechenaufwand (geringe, konstante Anzahl an Rechenoperationen) die gewünschte Flugleistungsreferenzkennzahl aus dem Flugleistungsmodell ermittelbar ist, so dass die gesamte Detektion einer Flugzeugvereisung kontinuierlich während des Fluges in Echtzeit durchführbar ist. Der Pilot kann somit sofort in einer Vereisung signalisiert werden. Es muss somit kein vollständiges dynamisches Modell simuliert werden, dass eine hohe Rechenleistung bedarf, die gerade bei kleineren unbemannten Flugobjekten nicht bereitgestellt werden kann.

Die Aufgabe wird im Übrigen auch mit dem Assistenzsystem gemäß Anspruch 15 zur Durchführung des vorstehend genannten Verfahrens erfindungsgemäß gelöst. Das Assistenzsystem weist insbesondere eine elektronische Auswerteeinheit auf, um die Berechnungen der aktuellen Flugleistungskennzahl und der nominellen Flugleistungsreferenzkennzahl sowie die Detektion der Vereisung durch Vergleich beider Kennzahlen durchzuführen. Außerdem weist das Assistenzsystem einen Datenspeicher auf oder steht mit einem solchen in kommunikativer Verbindung, wobei in dem Datenspeicher das digitale Flugleistungsmodell hinterlegt ist.

Die Erfindung wird anhand der beigefügten Figuren beispielhaft erläutert. Es zeigen:

Figur 1 - Schematische Darstellung eines Assistenzsystems;

Figur 2 - vereinfachte Darstellung eines tabellarischen Flugleistungsmodells.

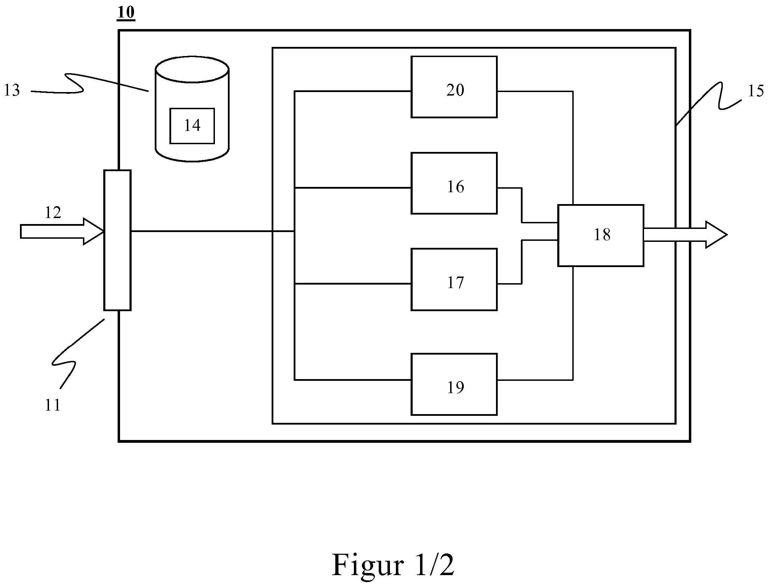

Figur 1 zeigt schematisch das Assistenzsystem 10, bei dem es sich beispielsweise um eine elektronische Datenverarbeitungsanlage innerhalb der Avioniksysteme eines Flugzeuges handeln kann. Denkbar ist aber auch, dass das Assistenzsystem 10 außerhalb des Flugzeuges vorgesehen ist, wobei dann eine kommunikative Verbindung zwischen dem Assistenzsystem einerseits und dem Flugzeug andererseits bestehen muss, um die für die Berechnung und die Detektion notwendigen Daten des Flugzustandes an das Assistenzsystem 10 zu übertragen und eine mögliche Vereisungsdetektion wieder zurück in das Flugzeug übertragen zu können. Denkbar ist auch die Nutzung als "Post-Flight Analyse".

In den weiteren Ausführungen wird jedoch davon ausgegangen, dass das Assistenzsystem 10 Bestandteil eines Flugzeuges ist.

Das Assistenzsystem 10 ist über eine Schnittstelle 11 mit dem Datenbus 12 der Avioniksysteme des Flugzeuges verbunden, um die für die Detektion notwendigen Flugzustandsparameter erfassen zu können. Über diesen Datenbus 12 steht das Assistenzsystem 10 indirekt mit den standardmäßig im Flugzeug verbauten Sensoren in Verbindung und kann so die für die Detektion notwendigen Flugzustandsparameter, die mithilfe der Sensoren während des Fluges gemessen werden, erfassen und von dem Datenbus 12 über die Schnittstelle 11 abgreifen.

Das Assistenzsystem 10 weist des Weiteren einen digitalen Datenspeicher 13 auf, in dem das Flugleistungsmodell 14 in Form einer mehrdimensionalen Tabelle hinterlegt ist. Die mehrdimensionale Tabelle hat aber den Vorteil, dass die Ermittlung der Flugleistungsreferenzkennzahl ohne besonderen Rechenaufwand möglich ist, da sie sich in Abhängigkeit der konkreten Werte der Flugzustandsparameter des Flugzustandes direkt aus der Tabelle ergeben. Darüber hinaus besteht die Möglichkeit, zwischen Flugleistungsreferenzkennzahlen zu interpolieren, wenn die Werte der Flugzustandsparameter des Flugzustandes die entsprechenden Stützstellen nicht direkt abbilden.

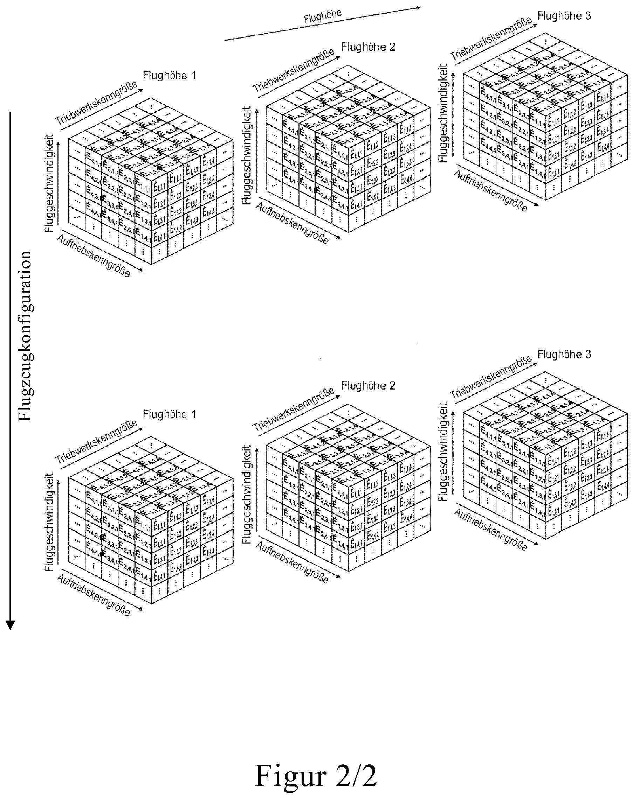

Wie in Figur 2 gezeigt, kann eine solche tabellarische Darstellung des digitalen Flugleistungsmodells aus beispielsweise fünf Dimensionen bestehen, wobei jeweils eine Dimension für die Fluggeschwindigkeit, eine Dimension für eine Auftriebskenngröße, eine Triebwerkskenngröße, die Flughöhe, sowie eine übergeordnete Flugzeugkonfiguration vorgesehen ist.

Zurück zu Figur 1, das Assistenzsystem 10 weist des Weiteren eine elektronische Auswerteeinheit 15 auf, die zur Detektion eines Vereisungszustandes ausgebildet ist. Hierfür weist die Auswerteeinheit 15 ein Referenzmodul 16 auf, das zum Berechnen bzw. Ermitteln einer nominellen Flugleistungsreferenzkennzahl ausgebildet ist. Im Ausführungsbeispiel der Figur 1 ist die nominelle Flugleistungsreferenzkennzahl die Gesamtenergieänderung $\dot{E}_{ref}$, die auch in dem Flugleistungsmodell gemäß Figur 2 in der Tabelle hinterlegt ist.

Das Referenzmodul 16 ist dabei mit dem digitalen Datenspeicher 13, in dem das Flugleistungsmodell 14 hinterlegt ist, verbunden, um auf die dort hinterlegte Tabelle 14 zugreifen zu können. Des Weiteren ist das Referenzmodul 16 signaltechnisch mit dem Datenbus 12 über die Schnittstelle 11 verbunden, um die für die Berechnung und Ermittlung

der Gesamtenergieänderung $\dot{E}_{ref}$ notwendigen Flugzustandsparameter und deren aktuellen Werten ermitteln zu können.

Im Ausführungsbeispiel der Figur 1 benötigt das Referenzmodul 16 mindestens die aktuelle Fluggeschwindigkeit $V_{TAS}$ gegenüber der umströmenden Luft, die aktuelle barometrische Höhe H, die aktuelle Gesamtmasse m, Werte bezüglich der Lastvielfachen (zumindest in der Auftriebsachse, vorteilhafterweise auch in der Längs- und Querachse) eine Triebwerkskenngröße sowie Informationen bezüglich der Flugzeugkonfiguration. Bei der Triebwerkskenngröße kann es sich beispielsweise um die Niederdruckwellendrehzahl der Triebwerke des Flugzeuges handeln (bspw. als gemittelte Kenngröße über alle Triebwerke). Weist das Flugzeug zwei oder mehr Triebwerke auf, so ist es denkbar, dass die Niederdruckwellendrehzahl über die Triebwerke gemittelt wird.

Bezüglich der Flugzeugkonfiguration werden Informationen übertragen, die die aktuelle Flugzeugkonfiguration wiederspiegeln. Dies sind Informationen bezüglich des Fahrwerks (ausgefahren, eingefahren) sowie Informationen bezüglich auftriebsverändernder Maßnahmen, wie beispielsweise Hochauftriebssysteme, Vorflügel, Landeklappen. Diese Informationen sind deshalb vorteilhaft, da durch derartige Veränderung der Flugzeugkonfiguration in die Aerodynamik des Flugzeuges eingegriffen und somit der Gesamtwiderstand des Flugzeuges verändert wird. Um zu verhindern, dass bei einer Veränderung der Flugzeugkonfiguration und damit einhergehende Veränderung des Gesamtwiderstandes nicht auf einer Vereisung beruhenden Variation der Flugleistung geschlossen wird, werden die einzelnen möglichen Flugzeugkonfigurationen im Flugleistungsmodell mit berücksichtigt, so dass für jede Flugzeugkonfiguration auch eine korrekte nominelle Flugleistungsreferenzkennzahl ermittelbar ist.

Für die Ermittlung der nominellen Gesamtenergieänderung $\dot{E}_{ref}$ wird zunächst eine Auftriebskenngröße A benötigt, die sich nach der Formel

$$A \equiv \left(n_z\right)^a \cdot g \cdot m$$

ergibt. Das Lastvielfache $(n_z)^a$ kann dabei nach der Formel

$$\left(n_z\right)^a \equiv -\left(n_x\right)^f \cdot \sin\left(\alpha\right) + \left(n_z\right)^f \cdot \cos\left(\alpha\right)$$

berechnet werden, wobei der Winkel a der Anstellwinkel ist.

Basierend auf der aktuellen Flugzeugkonfiguration wird nun die mehrdimensionale Tabelle des Flugleistungsmodells 14 aus dem digitalen Datenspeicher ermittelt, die zu der aktuellen Flugzeugkonfiguration passt. Dann wird basierend auf den Werten der aktuellen Flughöhe, der Auftriebskenngröße, der Fluggeschwindigkeit sowie der Triebwerkskenngröße aus der Tabelle dann die nominelle zeitliche Gesamtenergieänderung $\dot{E}_{ref}$ ermittelt und in dem Referenzmodul 16 zwischengespeichert.

Die nominelle zeitliche Gesamtenergieänderung $\dot{E}_{ref}$ ist dabei eine Kenngröße der Flugleistung des Flugzeuges im unvereisten Zustand und kann insoweit als ein idealisierter Wert verstanden werden. Diese Referenzkennzahl der Flugleistung kann dabei entweder für den Flugzeugtyp des Flugzeuges im Allgemeinen vorgesehen sein oder auf das Flugzeug speziell angepasst werden, beispielsweise wenn das Flugzeug schon etwas älter ist, wodurch sich eine veränderte Flugleistung ergibt. Hierdurch kann das Gesamtsystem deutlich genauer werden.

Des Weiteren weist die Auswerteeinheit 15 ein Flugzustandsmodul 17 auf, das ebenfalls mit der Schnittstelle 11 an den Datenbus 12 angebunden ist und anhand von entsprechenden Flugzustandsparametern eine aktuelle Flugleistungskennzahl in Form einer Gesamtenergieänderung $E_{ges}$ berechnen kann. Das Flugzustandsmodul 17 erhält hierfür mindestens die aktuelle Fluggeschwindigkeit $V_{TAS}$, die aktuelle Höhe H, die Flugzeuggesamtmasse m sowie eine zeitliche Änderung der Flugzeuggesamtmasse m als Flugzustandsparameter.

Basierend auf diesen Werten lässt sich dann mithilfe der Formel

$$\dot{E}_{ges} \approx (g \cdot \dot{H} \cdot m) + (g \cdot H \cdot \dot{m}) +$$

$$(V_{TAS} \cdot \dot{V}_{TAS} \cdot m) + (\frac{1}{2} \cdot V_{TAS}^2 \cdot \dot{m})$$

die aktuelle zeitliche Gesamtenergieänderung als eine Flugleistungskenngröße ermitteln.

Um atmosphärisch bedingte Fehldetektionen zu vermeiden, wird vorteilhafterweise von einem quasi-stationären Zustand der Atmosphäre ausgegangen. Die zeitliche Änderung der Norm des Anströmgeschwindigkeitsvektors $\dot{V}_{TAS}$ können neben einem Anteil aus der Änderung der Bahngeschwindigkeit (Flugzeugbewegung im quasi-stationären, homogenen Windfeld) zusätzlich einen Anteil aus der zeitlichen, erfahrenen Windänderung (Flug durch ein stationäres und/oder inhomogenes Windfeld) beinhalten mit

$$\dot{V}_{TAS} = \dot{V}_{TAS,\dot{V}_K} + \dot{V}_{TAS,\dot{V}_w}$$

Der Anteil $\dot{V}_{TAS,\dot{V}_K}$ wird hierbei maßgeblich von den Eigenschaften des Flugzeuges dominiert und beinhaltet somit entsprechend die Flugleistung. Dahingegen ergibt sich die Änderung der Anströmung durch eine Windänderung $\dot{V}_{TAS,\dot{V}_w}$ aus der instationären Atmosphäre, durch die sich das Flugzeug bewegt. Mit den geschätzten Komponenten des Windes im z.B. geodätischen Koordinatensystem (wie vorteilhaft hier nachfolgend ausgeführt), können diese beiden Anteile analytisch getrennt werden. Es gilt:

$$(\vec{V}_{TAS})_g = (\vec{V}_k)_g - (\vec{V}_w)_g$$

$$\Rightarrow (\dot{\vec{V}}_{TAS})_g = \frac{d}{dt}\left((\vec{V}_k)_g - (\vec{V}_w)_g\right)$$

wodurch sich für die Norm von $\dot{\vec{V}}_{TAS}$ als skalare Änderung der Fluggeschwindigkeit

$$\dot{V}_{TAS} = \frac{d}{dt}\left(\sqrt{(u_{k,g} - u_{w,g})^2 + (v_{k,g} - v_{w,g})^2 + (w_{k,g} - w_{w,g})^2}\right)$$

$$= \frac{d}{dt}\left(\sqrt{(u_{a,g})^2 + (v_{a,g})^2 + (w_{a,g})^2}\right)$$

ergibt. Da im quasi-stationären Windfall nur die Terme zu berücksichtigen sind, welche eine Änderung der Bahngeschwindigkeit beinhalten, können diese aus der analytischen Ableitung der Anströmgeschwindigkeit extrahiert werden. Somit folgt die Änderung der am Flugzeug wirksamen Anströmgeschwindigkeit ohne Windänderung zu

$$\dot{V}_{TAS,\dot{V}_k} = \frac{\dot{u}_{k,g} u_{a,g} + \dot{v}_{k,g} v_{a,g} + \dot{w}_{k,g} w_{a,g}}{V_{TAS}} .$$

wobei $\dot{u}_{k,g}, \dot{v}_{k,g}, \dot{w}_{k,g}$ die drei Komponenten des Bahnbeschleunigungsvektors (zeitliche Ableitung der Bahngeschwindigkeiten) im geodätischen Koordinatensystem, $u_{a,g}, v_{a,g}, w_{a,g}$ die drei Komponenten des Vektors der aktuellen Fluggeschwindigkeit gegenüber der Luft, $V_{TAS}$ die Geschwindigkeit des Flugzeuges gegenüber der Luft und $\dot{V}_{TAS,\dot{V}_k}$ die Änderung der aktuellen Fluggeschwindigkeit auf Grund einer Änderung der Bahngeschwindigkeit ist.

Weiterhin lässt sich der Anteil $\dot{V}_{TAS,\dot{V}_w}$, der aus der Windänderung resultiert, aus den verbleibenden Termen zusammenfassen, da diese durch das instationäre Verhalten der Atmosphäre geprägt sind:

$$\dot{V}_{TAS,\dot{V}_w} = -\frac{\dot{u}_{w,g} u_{a,g} + \dot{v}_{w,g} v_{a,g} + \dot{w}_{w,g} w_{a,g}}{V_{TAS}} .$$

wobei $\dot{u}_{w,g}, \dot{v}_{w,g}, \dot{w}_{w,g}$ die drei Komponenten des Vektors der zeitliche Ableitung der Windgeschwindigkeiten im geodätischen Koordinatensystem, $u_{a,g}, v_{a,g}, w_{a,g}$ die drei Komponenten des Vektors der aktuellen Fluggeschwindigkeit gegenüber der Luft, $V_{TAS}$ die Geschwindigkeit des Flugzeuges gegenüber der Luft und $\dot{V}_{TAS,\dot{V}_k}$ die Änderung der aktuellen Fluggeschwindigkeit auf Grund einer Änderung der Bahngeschwindigkeit ist

Einerseits kann nun die aus der gemessenen Fluggeschwindigkeit bestimmte Zeitableitung $\dot{V}_{TAS}$ um die Anteile aus dem instationären Verhalten der Atmosphäre $\dot{V}_{TAS,\dot{\vec{V}}_w}$ korrigiert werden. Andererseits kann auch der Anteil der aus der Änderung der Bahngeschwindigkeit $\dot{V}_{TAS,\dot{\vec{V}}_k}$ im geschätzten, stationären Windfeld bestimmt und verwendet werden, was an dieser Stelle favorisiert wird, da sich die Bahnbeschleunigungen zuverlässig mit einer Inertialnavigationsplattform messen lassen und notwendigen Anströmgrößen gut gemessen und/oder geschätzt werden können. Dadurch wird das Problem der Bestimmung der zeitlichen Ableitung der Komponenten des Windvektors in der Gleichung umgegangen. Weiterhin müsste die numerische Zeitableitung von $\dot{V}_{TAS}$ gesondert gefiltert werden, um Fehldetektionen, die durch die Ableitung von dem Signal überlagerten Rauschen entstehen können, zu verhindern. Die Korrektur

$$\dot{E}_{ges,korrigiert} = \dot{E}_{ges} - V_{TAS} \cdot \dot{V}_{TAS,\dot{\vec{V}}_w} \cdot m$$

eines allein aus Messgrößen ermittelten Wertes $\dot{E}_{ges}$ um die Anteile aus der Windänderung ist zwar entsprechend möglich, wird jedoch gegenüber der direkten Berechnung mit $\dot{V}_{TAS,\dot{\vec{V}}_k}$ als zu aufwändig und nicht zuverlässig genug angesehen.

Mit dem vorhandenen Vektor $\hat{\dot{\vec{V}}}_{TAS}$ der Anströmung inklusive des geschätzten Windes sowie dessen Norm $\hat{V}_{TAS}$ lässt sich die zeitliche Änderung der Anströmgeschwindigkeit $\dot{V}_{TAS,\dot{\vec{V}}_k}$ bestimmen

$$\dot{\hat{V}}_{TAS,\dot{\vec{V}}_k} = \frac{\dot{u}_{k,g}\hat{u}_{a,g} + \dot{v}_{k,g}\hat{v}_{a,g} + \dot{w}_{k,g}\hat{w}_{a,g}}{V_{TAS}} \, .$$

Der aktuelle Flugleistungszustand in einer vorteilhaften Ausführungsform folgt somit für einen quasi-stationären Windfall direkt aus

$$\dot{E}_{ges} = m \cdot V_{TAS} \cdot \dot{V}_{TAS,\dot{\vec{V}}_k} + \frac{1}{2} \cdot \dot{m} \cdot V_{TAS}^2 + m \cdot g \cdot \dot{H} + \dot{m} \cdot g \cdot H.$$

Die beiden Kennzahlen für die Flugleistung, d.h. die nominelle zeitliche Gesamtenergieänderung $\dot{E}_{ref}$ sowie die aktuelle zeitliche Gesamtenergieänderung $E_{ges}$ des Referenzmoduls 16 und des Flugzustandsmoduls 17 werden dann in ein Detektionsmodul 18 eingesetzt, welches dann die entsprechende Vereisungsdetektion durchführt. Dies kann beispielsweise dadurch geschehen, dass ein Referenzwiderstandsbeiwert berechnet wird, der die Differenz der Widerstandsbeiwerte basierend auf den beiden Gesamtenergieänderungen kennzeichnet. Hierfür wird dem Detektionsmodul 18 des Weiteren auch die aktuelle Geschwindigkeit $V_{TAS}$, der Staudruck $q$ sowie die aktuelle Flügelfläche $S$ bereitgestellt.
Mithilfe der Formel

$$\Delta C_W = \frac{\dot{E}_{ref} - \dot{E}_{ges}}{q \cdot S \cdot V_{TAS}}$$

wird dann der Differenzwiderstandsbeiwert $\Delta C_W$ berechnet, wobei eine Vereisung dann angenommen wird, wenn der Differenzwiderstandswert $\Delta C_W$ größer ist als ein Schwellenwert. Dieser Schwellwert kann beispielsweise bei 30 % des Nullwiderstandsbeiwertes liegen.
Um Verfälschungen der Detektion bei einem Schiebeflug zu vermeiden, ist des Weiteren ein Schiebeflugmodul 19 vorgesehen, das einen Widerstandsbeiwert-Kompensationswert berechnet, um den verfälschenden Zustand des Schiebefluges aus dem eigentlichen Differenzwiderstandsbeiwertes herauszurechnen.
Der Schiebewinkel kann dabei geschätzt werden durch

$$\hat{\beta} = \arcsin\left( \frac{\hat{v}_a}{\hat{V}_{TAS}} \right)$$

Der Widerstandsbeiwert-Kompensationswert $\Delta C_{W,komp}$ berechnet sich dann gemäß der Formel

$$\Delta C_{W\beta,komp} \equiv -\frac{n_y \cdot m \cdot g \cdot \sin \hat{\beta}}{q \cdot S}$$

und wird ebenfalls dem Detektionsmodul 18 bereitgestellt. Der Referenzwiderstandsbeiwert $\Delta Cw$ wird dann in Abhängigkeit der Formel

$$\Delta C_W = \frac{\dot{E}_{ref} - \dot{E}_{ges}}{q \cdot S \cdot V_{TAS}} - \Delta C_{W\beta,komp}$$

berechnet, wobei hier die entsprechenden Anteile des Schiebefluges durch den Widerstandsbeiwert-Kompensationswert $\Delta C_{W\beta,komp}$ eliminiert wurden. Schließlich kann vorteilhafterweise noch ein Gültigkeitsmodul 20 vorgesehen sein, welches Flugzustandsparameter zur Bestimmung eines Gültigkeitsindexes erhält. Da es sich bei dem Flugleistungsmodell um ein reduziertes Leistungsmodell handelt, sind Flugzustände denkbar, bei denen der Gültigkeitsbereich des Referenzmodells verlassen wird bzw. wofür das Referenzmodell eine reduzierte Genauigkeit aufweist. Dies kann beispielsweise das Ausfahren von Spoilern während des Fluges sein, wodurch die Aerodynamik des Gesamtflugzeuges stark verändert wird. Da dies jedoch relativ selten auftritt, lohnt es sich hierfür meist nicht, ein erweitertes bzw. gesondertes Flugleistungsmodell zu erstellen.

Wird von dem Gültigkeitsmodul 20 anhand der Flugzustandsparameter erkannt, dass die Grenzen des Flugleistungsmodells 14 verlassen werden, so wird dies an das Detektionsmodul 18 signalisiert, um so dem Detektionsmodul 18 anzuzeigen, dass eine valide Detektion einer Flugleistungsdegradierung bzw. Flugzeugvereisung nicht mehr möglich ist. In diesem Fall würde das Detektionsmodul eine möglicherweise erkannte Flugzeugvereisung nicht weiter detektieren und eine entsprechende Warnung nicht ausgeben.

**Bezugszeichenliste**

10 - Assistenzsystem
11 - Schnittstelle
12 - Datenbus
13 - digitale Datenspeicher
14 - Flugleistungsmodul
15 - Auswerteeinheit
16 - Referenzmodul
17 - Flugzustandsmodul
18 - Detektionsmodul
19 - Schiebeflugmodul
20 - Gültigkeitsmodul

Ai/au

**Patentansprüche**

1. Verfahren zur Detektion einer durch eine Vereisung hervorgerufene Flugleistungsdegradierung eines im Flug befindlichen Flugzeuges, wobei ein digitales Flugleistungsmodell für den betreffenden Flugzeugtyp des im Flug befindlichen Flugzeuges bereitgestellt wird, das die nominelle Flugleistung des Flugzeuges im nicht-degradierten Flugzustand abbildet, mit den Schritten:

a) Ermitteln eines aktuellen Flugzustandes des im Flug befindlichen Flugzeuges, wobei der aktuelle Flugzustand aus einer Mehrzahl von Werten von die Flugleistung des Flugzeuges beeinflussende oder charakterisierende Flugzustandsparametern beinhaltet, die zumindest teilweise mittels an dem Flugzeug vorgesehenen Sensoren erfasst werden,

b) Berechnen einer aktuellen Flugleistungskennzahl aus einem oder mehreren Flugzustandsparametern des aktuell ermittelten Flugzustandes mittels einer elektronischen Auswerteeinheit (15),

c) Ermitteln einer nominellen Flugleistungsreferenzkennzahl aus dem bereitgestellten Flugleistungsmodell in Abhängigkeit von einem oder mehreren Flugzustandsparametern des aktuell ermittelten Flugzustandes mittels der elektronischen Auswerteeinheit (15), und

d) Detektieren einer Flugleistungsdegradierung des Flugzeuges im Flug in Abhängigkeit von einem Vergleich zwischen der aktuellen Flugleistungskennzahl und der nominellen Flugleistungsreferenzkennzahl, wenn die Abweichung größer ist als ein vorgegebener Grenzwert, mittels der elektronischen Auswerteeinheit (15),

**dadurch gekennzeichnet, dass** die aktuelle Flugleistungskennzahl eine Gesamtenergieänderung über eine vorgegebene Zeitspanne ist.

2. Verfahren nach Anspruch 1, **dadurch gekennzeichnet, dass** als Flugzustandsparameter die aktuelle Fluggeschwindigkeit, eine zeitliche Änderung der aktuellen Fluggeschwindigkeit, die aktuelle Höhe, eine zeitliche Änderung der aktuellen Flughöhe, die aktuelle Flugzeuggesamtmasse, eine zeitliche Änderung der Flugzeuggesamtmasse, eine Triebwerkskenngröße zur Bestimmung der Triebwerksleistung oder des Triebwerksschubs, ein Lastvielfaches, eine aktuelle Auftriebskenngröße des Flugzeuges, der aktuelle Staudruck und/oder eine aktuelle Flugzeugkonfiguration.

3. Verfahren nach Anspruch 2, **dadurch gekennzeichnet, dass** eine aktuelle Auftriebskraft A als die aktuelle Auftriebskenngröße des Flugzeuges als ein Flugzustandsparameter sich nach der Formel

$$A \equiv \left(n_z\right)^a \cdot g \cdot m$$

berechnet wird, wobei A die Auftriebskraft, $(n_z)^a$ ein Lastvielfaches in der Auftriebsachse des Flugzeuges, g die Erdbeschleunigung und m die Flugzeuggesamtmasse ist.

4. Verfahren nach Anspruch 3, **dadurch gekennzeichnet, dass** sich das Lastvielfache $(n_z)^a$ in der Auftriebsachse des Flugzeuges nach der Formel

$$\left(n_z\right)^a \equiv -\left(n_x\right)^f \cdot \sin\left(\alpha\right) + \left(n_z\right)^f \cdot \cos\left(\alpha\right)$$

berechnet wird, wobei $(n_x)^f$ das Lastvielfache in der Längsachse des Flugzeuges, $(n_z)^f$ das Lastvielfache in der Hochachse des Flugzeuges und a der Anstellwinkel ist.

5. Verfahren nach einem der Ansprüche 2 bis 4, **dadurch gekennzeichnet, dass** für die Triebwerkskenngröße zur Bestimmung der Triebwerksleistung als ein Flugzustandsparameter die Niederdruckwellendrehzahl mindestens eines Triebwerkes des Flugzeuges ermittelt wird.

6. Verfahren nach einem der vorhergehenden Ansprüche, **dadurch gekennzeichnet, dass** die aktuelle Flugleistungskennzahl als Gesamtenergieänderung nach der Formel

$$\dot{E}_{ges} = m \cdot V_{TAS} \cdot \dot{V}_{TAS} + \frac{1}{2} \cdot \dot{m} \cdot V_{TAS}^2 + m \cdot g \cdot \dot{H} + \dot{m} \cdot g \cdot H$$

berechnet wird, wobei $(E_{ges})$ die Gesamtenergieänderung über die vorgegebene Zeitspanne, H die aktuelle Flughöhe, (H) die zeitliche Änderung der Flughöhen über die vorgegebene Zeitspanne, $V_{TAS}$ die aktuelle Fluggeschwindigkeit gegenüber der umströmenden Luft, $\dot{V}_{TAS}$ die zeitliche Änderung der Fluggeschwindigkeit gegenüber der umströmenden Luft über die vorgegebene Zeitspanne, m die aktuelle Flugzeuggesamtmasse, (m) die zeitliche Änderung der Flugzeuggesamtmasse über die vorgegebene Zeitspanne und g die Erdbeschleunigung ist.

7. Verfahren nach einem der vorhergehenden Ansprüche, **dadurch gekennzeichnet, dass** die nominelle Flugleistungsreferenzkennzahl eine nominelle Gesamtenergieänderung über eine vorgegebene Zeitspanne ist, wobei ein Flugleistungsmodell bereitgestellt wird, aus dem sich basierend auf dem aktuellen Flugzustand die nominelle Gesamtenergieänderung für den aktuellen Flugzustand ableiten lässt.

8. Verfahren nach Anspruch 7, **dadurch gekennzeichnet, dass** in Abhängigkeit von der aktuellen Gesamtenergieänderung als aktuelle Flugleistungskennzahl und der nominellen Gesamtenergieänderung als nominelle Flugleistungsreferenzkennzahl ein Differenzwiderstandsbeiwert ΔCw gemäß der Formel

$$\Delta C_W = \frac{\dot{E}_{ref} - \dot{E}_{ges}}{q \cdot S \cdot V_{TAS}}$$

mit ($\dot{E}_{ges}$) als aktuelle Gesamtenergieänderung, ($\dot{E}_{ref}$) als nominelle Gesamtenergieänderung, $V_{TAS}$ als Geschwindigkeit des Flugzeuges gegenüber der Luft, q als den Staudruck und S als die Referenzfläche des Flugzeuges berechnet wird, wobei eine Flugleistungsdegradierung detektiert wird, wenn der Differenzwiderstandsbeiwert größer ist als der Grenzwert.

9. Verfahren nach einem der vorhergehenden Ansprüche, **dadurch gekennzeichnet, dass** die aktuelle Flugleistungskennzahl weiterhin unter Berücksichtigung einer vom Flugzeug erfahrenen Windvariation ermittelt wird.

10. Verfahren nach Anspruch 9, **dadurch gekennzeichnet, dass** ein Windanteil einer zeitliche Änderung der Geschwindigkeit des Flugzeuges gegenüber der Luft unter Berücksichtigung der erfahrenen Windvariation nach der Formel

$$\dot{V}_{TAS,\dot{V}_k} = \frac{\dot{u}_{k,g}u_{a,g} + \dot{v}_{k,g}v_{a,g} + \dot{w}_{k,g}w_{a,g}}{V_{TAS}}$$

wobei $\dot{u}_{k,g}, \dot{v}_{k,g}, \dot{w}_{k,g}$ die drei Komponenten des Bahnbeschleunigungsvektors (zeitliche Ableitung der Bahngeschwindigkeiten) im geodätischen Koordinatensystem, $u_{a,g}, v_{a,g}, w_{a,g}$ die drei Komponenten des Vektors der aktuellen Fluggeschwindigkeit gegenüber der Luft, $V_{TAS}$ die Geschwindigkeit des Flugzeuges gegenüber der Luft und $\dot{V}_{TAS,\dot{V}_k}$ die Änderung der aktuellen Fluggeschwindigkeit auf Grund einer Änderung der Bahngeschwindigkeit ist, und die aktuelle Flugleistungskennzahl als eine Gesamtenergieänderung über eine vorgegebene Zeitspanne angegeben ist und nach der Formel

$$\dot{E}_{ges} = m \cdot V_{TAS} \cdot \dot{V}_{TAS} + \frac{1}{2} \cdot \dot{m} \cdot V_{TAS}^2 + m \cdot g \cdot \dot{H} + \dot{m} \cdot g \cdot H.$$

berechnet wird, wobei $\dot{V}_{TAS} = \dot{V}_{TAS,\dot{V}_k}$ ist.

11. Verfahren nach einem der vorhergehenden Ansprüche, **dadurch gekennzeichnet, dass** des Weiteren Werte von Flugzustandsparameter zur Bestimmung eines Schiebeflugzustandes ermittelt werden, wobei in Abhängigkeit von diesen ermittelten Werte von Flugzustandsparametern zur Bestimmung des Schiebeflugzustandes ein Kompensationswert der aktuellen Flugleistungskennzahl berechnet und der Vergleich weiterhin in Abhängigkeit von dem Kompensationswert durchgeführt wird.

12. Verfahren nach Anspruch 11, **dadurch gekennzeichnet, dass** der Kompensationswert eine Widerstandskompensationswert ist, die nach der Formel

$$\Delta C_{W\beta,komp} \equiv -\frac{n_y \cdot m \cdot g \cdot \sin \hat{\beta}}{q \cdot S_F}$$

berechnet wird, wobei $\Delta C_{W,komp}$ der Widerstandskompensationswert, $n_y$ ein seitliches Lastvielfaches, m die Flugzeuggesamtmasse, g die Erdbeschleunigung, β der Schiebewinkel, q der Staudruck und $S_F$ die Referenzfläche des Flugzeuges ist.

13. Verfahren nach einem der vorhergehenden Ansprüche, **dadurch gekennzeichnet, dass** ein reduziertes Flugleistungsmodell in Form einer mehrdimensionalen Tabelle bereitgestellt wird, wobei jeder für das Flugleistungsmodell relevante Flugzustandsparameter durch eine Tabellendimension abgebildet wird, wobei jede Tabellendimension eine Mehrzahl von Stützstellen aufweist, die vorgegebene Werte der jeweiligen Flugzustandsparameter sind, und wobei für jedes Stützstellenpaar aus Werten der verschiedenen Flugzustandsparameter jeweils mindestens eine nominelle Flugleistungsreferenzkennzahl hinterlegt ist.

14. Verfahren nach Anspruch 13, **dadurch gekennzeichnet, dass** die die Tabellendimensionen bildenden Flugzustandsparameter die Fluggeschwindigkeit gegenüber der umströmenden Luft, eine Auftriebskenngröße des Auftriebs des Flugzeuges, eine Triebwerkskenngröße der Triebwerksleistung, die Flughöhe und ggf. eine Flugzeugkonfiguration sind.

15. Assistenzsystem (10) zur Detektion einer durch eine Vereisung hervorgerufene Flugleistungsdegradierung eines im Flug befindlichen Flugzeuges, wobei das Assistenzsystem (10) zur Durchführung des Verfahrens zur Detektion der durch eine Vereisung hervorgerufene Flugleistungsdegradierung nach einem der vorhergehenden Ansprüche ausgebildet ist.

16. Flugzeug mit einem Assistenzsystem (10) gemäß Anspruch 15.

**Claims**

1. A method for detecting an icing-based degradation of flight performance of an aircraft in flight, providing for the aircraft type concerned a digital flight performance model, of the aircraft in flight, which replicates the nominal flight performance of the aircraft in the non-degraded flying state, with the steps of:

a) determining a current flying state of the aircraft in flight, the current flying state from a plurality of values comprising of flying state parameters that influence or characterize the flight performance of the aircraft, which are at least partially recorded by means of sensors provided on the aircraft,
b) calculating a current flight performance indicator from one or more flying state parameters of the currently determined flying state by means of an electronic evaluation unit (15),
c) determining a nominal flying performance reference indicator from the flight performance model provided in dependence on one or more flying state parameters of the currently determined flying state by means of the electronic evaluation unit (15), and
d) detecting a degradation of the flight performance of the aircraft in flight in dependence on a comparison between the current flight performance indicator and the nominal flight performance reference indicator if the deviation is greater than a predetermined limit value by means of the electronic evaluation unit (15),

**characterized in that** the current flight performance indicator is an overall change in energy over a predetermined time period.

2. The method as claimed in claim 1, **characterized in that** the current flying speed, a change over time of the current flying speed, the current altitude, a change over time of the current flying altitude, the current overall aircraft mass, a change over time of the overall aircraft mass, an engine characteristic for determining the engine performance or the engine thrust, a load factor, a current lift characteristic of the aircraft, the current dynamic pressure and/or a current aircraft configuration as flying state parameters.

3. The method as claimed in claim 2, **characterized in that** the current lift A is calculated as the current lift characteristic of the aircraft as a flying state parameter according to the formula

$$A \equiv \left(n_z\right)^a \cdot g \cdot m$$

where A is the lift, $(n_z)^a$ is a load factor in the lift axis of the aircraft, g is the acceleration due to gravity and m is the overall aircraft mass.

4. The method as claimed in claim 3, **characterized in that** the load factor $(n_z)^a$ in the lift axis of the aircraft is calculated according to the formula

$$\left(n_z\right)^a \equiv -\left(n_x\right)^f \cdot \sin(\alpha) + \left(n_z\right)^f \cdot \cos(\alpha)$$

where $(n_x)^f$ is the load factor in the longitudinal axis of the aircraft, $(n_z)^f$ is the load factor in the vertical axis of the aircraft and a is the angle of attack.

5. The method as claimed in one of the claims 2 to 4, **characterized in that** the low-pressure shaft speed of at least one engine of the aircraft is determined for the engine characteristic for determining the engine performance as a flying state parameter.

6. The method as claimed in one of the preceding claims, **characterized in that** the current flight performance indicator is calculated as the overall change in energy according to the formula

$$\dot{E}_{\mathrm{ov}} = m \cdot V_{TAS} \cdot \dot{V}_{TAS} + \frac{1}{2} \cdot \dot{m} \cdot V_{TAS}^2 + m \cdot g \cdot \dot{H} + \dot{m} \cdot g \cdot H$$

where $(\dot{E}_{ov})$ is the overall change in energy over the predetermined time period, H is the current flying altitude, (H) is the change over time of the flying altitudes over the predetermined time period, $V_{TAS}$ is the current flying speed with respect to the air flowing around, $\dot{V}_{TAS}$ is the change over time of the flying speed with respect to the air flowing around over the predetermined time period, m is the current overall aircraft mass, (m) is the change over time of the overall aircraft mass over the predetermined time period and g is the acceleration due to gravity.

7. The method as claimed in one of the preceding claims, **characterized in that** the nominal flight performance reference indicator is a nominal overall change in energy over a predetermined time period, a flight performance model being provided, from which the nominal overall change in energy for the current flying state can be derived on the basis of the current flying state.

8. The method as claimed in claim 7, **characterized in that** a differential resistance coefficient $\Delta C_W$ is calculated in dependence on the current overall change in energy as a current flight performance indicator and the nominal overall change in energy as a nominal flight performance reference indicator according to the formula

$$\Delta C_W = \frac{\dot{E}_{ref} - \dot{E}_{\mathrm{ov}}}{q \cdot S \cdot V_{TAS}}$$

where $(\dot{E}_{ov})$ is detected as the current overall change in energy, $(\dot{E}_{ref})$ as the nominal overall change in energy, $V_{TAS}$ as the speed of the aircraft with respect to the air, q as the dynamic pressure and S as the reference surface area of the aircraft, a degradation of the flight performance being detected if the differential resistance coefficient is greater than the limit value.

9. The method as claimed in one of the preceding claims, **characterized in that** the current flight performance indicator is determined while also taking into account a variation in the wind experienced by the aircraft.

10. The method as claimed in claim 9, **characterized in that** a wind component of a change over time of the speed of the aircraft with respect to the air while taking into account the variation in wind experienced according to the formula

$$\dot{V}_{TAS,\dot{V}_k} = \frac{\dot{u}_{k,g}u_{a,g} + \dot{v}_{k,g}v_{a,g} + \dot{w}_{k,g}w_{a,g}}{V_{TAS}}$$

where are the three components of the path acceleration vector (time derivative of the path speeds) in the geodetic system of coordinates, $u_{a,g}, v_{a,g}, w_{a,g}$ are the three components of the vector of the current flying speed with respect to the air, $V_{TAS}$ is the speed of the aircraft with respect to the air and $\dot{V}_{TAS,\dot{V}_k}$ is the change in the current flying speed because of a change in the path speed, and the current flight performance indicator is given as an overall change in energy over a predetermined time period and is calculated according to the formula

$$\dot{E}_{OV} = m \cdot V_{TAS} \cdot \dot{V}_{TAS} + \frac{1}{2} \cdot \dot{m} \cdot V_{TAS}^2 + m \cdot g \cdot \dot{H} + \dot{m} \cdot g \cdot H$$

where $\dot{V}_{TAS} = \dot{V}_{TAS,\dot{V}_k}$.

11. The method as claimed in one of the preceding claims, **characterized in that** values of flying state parameters for determining a sideslip state are furthermore determined, a compensation value of the current flight performance indicator being calculated in dependence on these determined values of flying state parameters for determining the sideslip state and the comparison also being carried out in dependence on the compensation value.

12. The method as claimed in claim 11, **characterized in that** the compensation value is a resistance compensation value, which is calculated according to the formula

$$\Delta C_{W\beta,Comp} \equiv -\frac{n_y \cdot m \cdot g \cdot \sin\hat{\beta}}{q \cdot S_F}$$

where $\Delta C_{W,comp}$ is the resistance compensation value, $n_y$ is a lateral load factor, m is the overall aircraft mass, g is the acceleration due to gravity, $\beta$ is the sideslip angle, q is the dynamic pressure and $S_F$ is the reference surface area of the aircraft.

13. The method as claimed in one of the preceding claims, **characterized in that** a reduced flight performance model is provided in the form of a multidimensional table, each flying state parameter that is relevant to the flight performance model being replicated by a dimension of the table, each dimension of the table having a plurality of interpolation points, which are the predetermined values of the respective flying state parameters, and at least one nominal flight performance reference indicator being stored for each pair of interpolation values comprising values of the various flying state parameters.

14. The method as claimed in claim 13, **characterized in that** the flying state parameters forming the dimensions of the table are the flying speed with respect to the air flowing around, a lift characteristic of the lift of the aircraft, an engine characteristic of the engine performance, the flying altitude and possibly an aircraft configuration.

15. An assistance system (10) for detecting a icing-based degradation of flight performance of an aircraft in flight, the assistance system (10) being designed for carrying out the method for detecting the icing-based degradation in flight performance as claimed in one of the preceding claims.

16. An aircraft with an assistance system (10) as claimed in claim 15.

**Revendications**

1.  Procédé de détection d'une dégradation, causée par givrage, de la performance de vol d'un avion en cours de vol, dans lequel un modèle numérique de la performance de vol est fourni pour le type d'avion concerné de l'avion en cours de vol, modèle qui représente la performance de vol nominale de l'avion dans l'état de vol non dégradé, comprenant les étapes consistant à :

    a) déterminer un état de vol actuel de l'avion en cours de vol, l'état de vol actuel étant déterminé à partir d'une pluralité de valeurs contenant des paramètres d'état de vol qui influencent ou caractérisent la performance de vol de l'avion et qui sont détectés au moins en partie au moyen de capteurs prévus sur l'avion,
    b) calculer un indice actuel de la performance de vol à partir d'un ou de plusieurs paramètres de l'état de vol actuellement déterminé, au moyen d'une unité d'évaluation électronique (15),
    c) déterminer un indice de référence nominal de la performance de vol à partir du modèle de performance de vol fourni, en fonction d'un ou de plusieurs paramètres de l'état de vol actuellement déterminé, au moyen de l'unité d'évaluation électronique (15), et
    d) détecter une dégradation de la performance de vol de l'avion en cours de vol en fonction d'une comparaison entre l'indice actuel de la performance de vol et l'indice de référence nominal de la performance de vol, si l'écart est supérieur à une valeur limite donnée, au moyen de l'unité d'évaluation électronique (15),

    **caractérisé en ce que**
    l'indice actuel de la performance de vol est une variation d'énergie totale sur une période de temps donnée.

2.  Procédé selon la revendication 1, **caractérisé en ce que** les paramètres de l'état de vol sont la vitesse de vol actuelle, une variation temporelle de la vitesse de vol actuelle, l'altitude actuelle, une variation temporelle de l'altitude de vol actuelle, la masse totale actuelle de l'avion, une variation temporelle de la masse totale de l'avion, une grandeur caractéristique du moteur pour déterminer la puissance du moteur ou la poussée du moteur, un facteur de charge, une grandeur caractéristique de portance actuelle de l'avion, la pression dynamique actuelle et/ou une configuration actuelle de l'avion.

3.  Procédé selon la revendication 2, **caractérisé en ce qu'**une force de portance actuelle A en tant que grandeur caractéristique de portance actuelle de l'avion est calculée comme paramètre de l'état de vol selon la formule

    $$A \equiv (n_z)^{\mathrm{a}} \cdot g \cdot m$$

    où A est la force de portance, $(n_z)^{\mathrm{a}}$ est un facteur de charge selon l'axe de portance de l'avion, g est l'accélération de la pesanteur, et m est la masse totale de l'avion.

4.  Procédé selon la revendication 3, **caractérisé en ce que** le facteur de charge $(n_z)^{\mathrm{a}}$ selon l'axe de portance de l'avion est calculé selon la formule

    $$(n_z)^a \equiv -(n_x)^f \cdot \sin(\alpha) + (n_z)^f \cdot \cos(\alpha)$$

    où $(n_x)^f$ est le facteur de charge selon l'axe longitudinal de l'avion, $(n_z)^f$ est le facteur de charge selon l'axe vertical de l'avion, et a est l'angle d'attaque.

5.  Procédé selon l'une des revendications 2 à 4, **caractérisé en ce que**, pour la grandeur caractéristique du moteur servant à déterminer la puissance du moteur, on détermine comme paramètre d'état de vol la vitesse de rotation de l'arbre basse pression d'au moins un moteur de l'avion.

6.  Procédé selon l'une des revendications précédentes, **caractérisé en ce que** l'indice actuel de la performance de vol en tant que variation d'énergie totale est calculé selon la formule

    $$\dot{E}_{ges} = m \cdot V_{TAS} \cdot \dot{V}_{TAS} + \frac{1}{2} \cdot \dot{m} \cdot V_{TAS}^2 + m \cdot g \cdot \dot{H} + \dot{m} \cdot g \cdot H$$

où ($\dot{E}_{ges}$) est la variation d'énergie totale sur la période de temps donnée, H est l'altitude de vol actuelle, ($\dot{H}$) est la variation temporelle des altitudes de vol sur la période de temps donnée, $V_{TAS}$ est la vitesse de vol actuelle par rapport à l'air environnant, $\dot{V}_{TAS}$ est la variation temporelle de la vitesse de vol par rapport à l'air environnant sur la période de temps donnée, m est la masse totale actuelle de l'avion, ($\dot{m}$) est la variation temporelle de la masse totale de l'avion sur la période de temps donnée, et g est l'accélération de la pesanteur.

7. Procédé selon l'une des revendications précédentes, **caractérisé en ce que** l'indice de référence nominal de la performance de vol est une variation nominale de l'énergie totale sur une période de temps donnée, un modèle de la performance de vol étant fourni, à partir duquel la variation nominale de l'énergie totale pour l'état de vol actuel peut être déduite sur la base de l'état de vol actuel.

8. Procédé selon la revendication 7, **caractérisé en ce que**, en fonction de la variation actuelle de l'énergie totale en tant qu'indice actuel de la performance de vol, et en fonction de la variation nominale de l'énergie totale en tant qu'indice de référence nominal de la performance de vol, un coefficient de traînée différentiel $\Delta$Cw est calculé selon la formule

$$\Delta C_w = \frac{\dot{E}_{ref} - \dot{E}_{ges}}{q \cdot S \cdot V_{TAS}}$$

avec ($\dot{E}_{ges}$) comme variation actuelle de l'énergie totale, ($\dot{E}_{ref}$) comme variation nominale de l'énergie totale, $V_{TAS}$ comme vitesse de l'avion par rapport à l'air, q comme pression dynamique et S comme surface de référence de l'avion, une dégradation de la performance de vol étant détectée lorsque le coefficient de traînée différentiel est supérieur à la valeur limite.

9. Procédé selon l'une des revendications précédentes, **caractérisé en ce que** l'indice actuel de la performance de vol est en outre déterminé en tenant compte d'une variation de vent subie par l'avion.

10. Procédé selon la revendication 9, **caractérisé en ce qu'**une part de vent dans une variation temporelle de la vitesse de l'avion par rapport à l'air est calculée en tenant compte de la variation de vent subie, selon la formule

$$\dot{V}_{TAS,\vec{V}k} = \frac{\dot{u}_{k,g}u_{a,g} + \dot{v}_{k,g}v_{a,g} + \dot{w}_{k,g}w_{a,g}}{V_{TAS}}$$

où $\dot{u}_{k,g},\dot{v}_{k,g},\dot{w}_{k,g}$ sont les trois composantes du vecteur d'accélération sur la trajectoire (dérivée temporelle des vitesses sur la trajectoire) dans le système de coordonnées géodésique, $u_{a,g},v_{a,g},w_{a,g}$ sont les trois composantes du vecteur de la vitesse de vol actuelle par rapport à l'air, $V_{TAS}$ est la vitesse de l'avion par rapport à l'air, et $\dot{V}_{TAS,\vec{V}k}$ est la variation de la vitesse de vol actuelle due à une variation de la vitesse sur la trajectoire, et l'indice actuel de la performance de vol est exprimé comme une variation d'énergie totale sur une période de temps donnée et est calculé selon la formule

$$\dot{E}_{ges} = m \cdot V_{TAS} \cdot \dot{V}_{TAS} + \frac{1}{2} \cdot \dot{m} \cdot V_{TAS}^2 + m \cdot g \cdot \dot{H} + \dot{m} \cdot g \cdot H$$

où s'applique $\dot{V}_{TAS} = \dot{V}_{TAS,\vec{V}k}$

11. Procédé selon l'une des revendications précédentes, **caractérisé en ce que** des valeurs de paramètres d'état de vol sont en outre déterminées pour définir un état de vol en dérapage, et, en fonction de ces valeurs déterminées de paramètres d'état de vol pour définir l'état de vol en dérapage, une valeur de compensation de l'indice actuel de la performance de vol est calculée, et la comparaison est en outre effectuée en fonction de la valeur de compensation.

12. Procédé selon la revendication 11, **caractérisé en ce que** la valeur de compensation est une valeur de compensation de traînée calculée selon la formule

$$\Delta C_{w\beta,komp} \equiv \frac{n_y \cdot m \cdot g \cdot \sin \hat{\beta}}{q \cdot S_F}$$

où $\Delta C_{w\beta,komp}$ est la valeur de compensation de la traînée, $n_y$ est un facteur de charge latéral, m est la masse totale de l'avion, g est l'accélération de la pesanteur, $\beta$ est l'angle de dérapage, q est la pression dynamique et $S_F$ est la surface de référence de l'avion.

13. Procédé selon l'une des revendications précédentes, **caractérisé en ce qu'**un modèle réduit de performance de vol est fourni sous la forme d'un tableau multidimensionnel, dans lequel chaque paramètre d'état de vol pertinent pour le modèle de performance de vol est représenté par une dimension du tableau, chaque dimension du tableau présente une pluralité de points d'appui qui sont des valeurs données des paramètres d'état de vol respectifs, et au moins un indice de référence nominal de la performance de vol est respectivement stocké pour chaque paire de points d'appui constituée de valeurs des différents paramètres d'état de vol.

14. Procédé selon la revendication 13, **caractérisé en ce que** les paramètres d'état de vol qui constituent les dimensions du tableau sont la vitesse de vol par rapport à l'air environnant, une grandeur caractéristique de la portance de l'avion, une grandeur caractéristique moteur de la puissance du moteur, l'altitude de vol et, le cas échéant, une configuration de l'avion.

15. Système d'assistance (10) pour détecter une dégradation, causée par givrage, de la performance de vol d'un avion en cours de vol, le système d'assistance (10) étant réalisé pour mettre en oeuvre le procédé de détection de la dégradation, causée par givrage, de la performance de vol selon l'une des revendications précédentes.

16. Avion équipé d'un système d'assistance (10) selon la revendication 15.

Figur 1/2

Figur 2/2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6253126 B1
- US 8692361 B2
- US 6304194 B1
- US 2016035203 A1
- US 2014090456 A1